# EUROPEAN PATENT SPECIFICATION

(11) **EP 0 846 944 B1**
(45) Date of publication and mention of the grant of the patent: **20.06.2001**
(21) Application number: 97203749.3
(22) Date of filing: 29.11.1997
(51) Int. Cl.: G01M 17/00, G01B 5/00, G01B 11/24

(54) **Device assembly for measuring geometric quantities of frames of cycles or motorcycles**
Vorrichtung zum Messen von geometrischen Grössen von Fahrrad- oder Motorradrahmen
Dispositif pour mesurer des grandeurs géométriques de cadres de cycles ou de motocycles

(30) Priority: 04.12.1996 IT MI962536
(43) Date of publication of application: 10.06.1998
(73) Proprietor: Scardino, Gino, 20135 Milano (IT)
(72) Inventor: Scardino, Gino, 20135 Milano (IT)
(74) Representative: Riccardi, Sergio

(56) References cited:
- EP-A- 0 037 267
- DE-U- 9 017 069
- US-A- 5 207 002

## Description

The present invention relates to the mechanical field and particularly that of vehicle frames. More particularly it relates to a new device assembly for checking and/or measuring physical quantities relating to frames of bicycles, motorcycles and the like.

It is known that vehicle frames, generally studied by skilled designers taking into account minimal details thereof, must always comply with the geometric requirements imposed by the project. Generally, by using the now existing modern and automated assembly techniques, it is not difficult to obtain the above compliance when the frame is assembled but it becomes difficult after, for example, a crash experienced by the frame.

In the past, the operations for straightening and restoring vehicle frames, particularly a bicycle or motorcycle frame, were hand made by using elementary tools and checking devices.

However, it is to be understood that even very small inaccuracies of a few degrees, or even a few hundredths, or a few millimeters, could be of importance for the stability of the vehicle and thus for the safety of the driver and/or a possible passenger.

DE-U-9 017 069 shows a device for measuring geometrical quantities relating to frames of motorcycles in which the part of the device mounted on the handlebar head is a rail on which a laser beam emitting device can slide. A receiver mounted on other parts of the device allows the measurement of a geometrical quantity.

Unfortunately the more complex way of mounting and the features of the components make the measurements complex and not very precise. Indeed it is necessary to disassemble several parts of the motorcycle to use this prior art device and the existing clearances summed to the possible damages present in the frame, make the precision achieved uneven.

EP-A-0 037 267 shows an apparatus for measuring geometrical quantities relating to frames of motor vehicles with at least four wheels including two or more measurement scale carriers in which one of the measurement scale carriers has targets movably mounted on opposite end portions of the carriers, while the other measurement scale carriers has laser beam emitting instruments mounted on the end portions.

US-A-5 207 002 shows a system for measuring geometrical quantities relating to frames of motor vehicles with at least four wheels, utilising an energy beam generator to direct one or more beams at multiple targets which may be mounted on the vehicle frame.

Unfortunately these documents show apparatus and system relating only the measurements on a four wheels vehicle or the like, cycle and motorcycle are excluded.

The present invention aims to solve the above inaccuracy problems occurring at present in restoring or checking frames of vehicles such as bicycles, motorcycles, motorbikes, scooters and the like which, for the purposes of the present application, are to be considered as equivalent.

Thus the present invention provides for an accurate, reliable and necessary device assembly for checking and/or measuring physical quantities, including angles, lengths and alignments, all the above quantities being related to motorcycle frames.

The assembly according to the invention has the features set forth in the independent claim 1 while the dependent claims recite further and/or minor features of the invention.

The invention will be fully disclosed through the following detailed description to be read with reference to the figures of the annexed sheets of drawings, in which:
- Figure 1 is a perspective diagrammatic view of a first embodiment of the device assembly as mounted to a motorbike frame, such a frame being shown as illustrative example only;
- Figure 2 is a side diagrammatic view of the frame of Figure 1 in order to define some geometrical quantities of said frame;
- Figure 3 is a side diagrammatic view of another motorbike frame to which a second embodiment of the device assembly according to the invention has been mounted;
- Figure 4 is a top view thereof, the digital goniometer being not shown; and
- Figure 5 is a partial cross-sectional view of a third embodiment of the device of the assembly according to the invention.

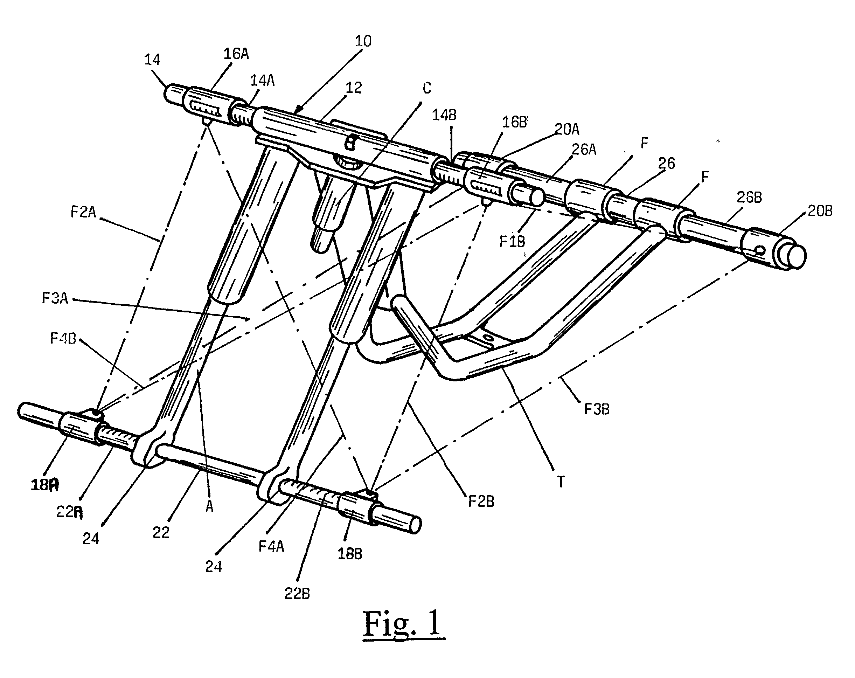

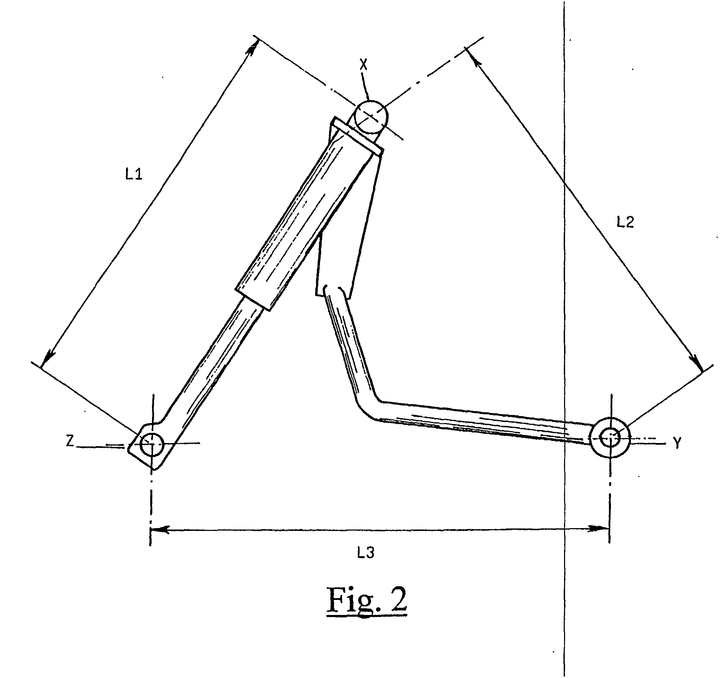

The assembly according to a first embodiment of the invention (Figures 1 and 2) comprises a device 10 and at least a bar-like or rod-like member 26. The device 10 is fundamentally provided for being mounted in place of the steering unit (fork or generally "forecarriage"), not shown in Figures 1 and 2, and provided with a portion thereof which can be inserted into the steering tube C and fixed in a centered position relative to it.

The device 10 can also be connected to the frame in such a manner as not to replace the steering unit, in other words without having to disassemble the handlebar and the front fork. For example it could be fixed to the upper end of the threaded bar which fixes the handlebar to the rest of the forecarriage: it will suffice to remove the proper locking nut, substitute an adapter for such a nut and fix the latter to the device 10. In such a manner one could use the device without disassembling the motorcycle.

The device 10 according to the first embodiment comprises a first outer tube-like element 12 and a second inner tube-like element 14 which is coaxial with the first element and rotatable within it by proper bearings (not shown). At the ends of said inner tube-like element 14, and at the same distance from its respective ends, two respective laser beam emitting elements 16A, 16B or, as it will be set forth hereinafter, graduated rulers are provided. Proper graduated areas 14A, 14B could be also provided for a correct longitudinal position of the elements 16A and 16B.

Between the two tube-like elements 12 and 14 means for evaluating and sensing the amplitude or amount of rotation of the second tube-like element 14 with respect to the first one 12 are provided, said first element being substantially integral to the frame T in the first embodiment. The above means could be, for example, usual goniometers, digital goniometers, inclinometers, electronic encoders and the like.

The elements 16A and 16B can emit a plurality of laser beams F1A (not shown), F2A, F4A and F1B, F2B and F4B respectively, both the direction and function thereof being better explained later or they can be so positioned as to point the laser beam emitted by each of them in accordance with the directions provided by F1A, F2A, F4A, F1B, F2B and F4B.

The said rod or bar 26 is adapted to be connected to the frame of the motorbike, for example and preferably by inserting it at the so called rear fork fulcrum F or the rear fork itself. Said bar 26 comprises, at its two ends, respective elements 20A, 20B receiving said laser beams F1A and F1B of Figure 1, or possibly the ends of graduated rulers. The elements 20A and 20B could also be small check holes in the bar 26.

Optionally the assembly according to the invention in addition comprises a further rod or bar 22 which could for example be inserted into pivot pins 24 of the front shock absorber A. Like the rod 26, the bar 22 comprises laser beam receiving elements 18A and 18B (even in the form of simple holes) placed at the ends of said rod 22 (graduated areas 22A and 22B could be provided for their simple and accurate mounting, or centering, with respect to elements 16A, 16B and 20A, 20B).

In other embodiments, as an alternative to the shown laser beam receiving elements, Doppler-effect distance sensors or photodiodes could be provided for.

In order to give a full understanding of the operation of the invention, the various laser beam paths will be diagrammatically given below (Figure 1):
F1A: 16A-20A; F1B: 16B-20B; F2A: 16A-18A; F2B: 16B-18B; F3A: 18A-20A; F3B: 18B-20B; F4A: 16A-18B; and F4B: 16B-18A (of course, in order to obtain the F3 beams, at the receiving elements 18 or 20, further laser beam emitting elements are needed).

Some of the possible checks and/or measurements in accordance with the present invention are the following:
a) Check of the parallelism between the axis of the device 10, and thus that of the support of the forecarriage (not shown), and the axis of the rear fork fulcrum: if the beams F1A and F1B are exactly aimed at the references provided at 20A and 20B, there is parallelism.
b) Check of the inclination between the device 10 axis and that of the rear fork:
   one can evaluate the inclination of one axis relative to the other one by pointing a beam F1A or F1B at one of the reference signs 20A or 20B and calculating the amount of rotation, which is needed with respect to such a position, for pointing the other of the two beams F1A or F1B so as to match with its corresponding reference sign 20A or 20B by an inclinometer, a goniometer or an electronic encoder.
c) Check of the centering of the frame: if the beams F1A and F1B, pointed to the bar 26, hit the bar 26 at the reference signs 20A and 20B, even not precisely at their exact and proper check position, one can understand that the frame is centered.
d) Check of the non centering of the frame: if one of the beams F1 hits the bar 26 shifted on the right or on the left with respect to the proper position, and the other of the beams F1 correspondingly hits the bar 26 in a position which is shifted on the right or on the left, the distance between the correct position and the actual hit point will indicate the "non centering amount" with respect to the center line. Further, if one of the beams F1 hits the rod while the other beam does not so, such a situation will indicate a verticality defect.
e) Check of the forward and backward inclination of the steering tube (it provides indications about the motorcycle wheel base): once one has checked that at least one of the lengths L1, L2, L3 corresponds to that which has been indicated by the manufacturer, or at least to that which has been obtained by the same apparatus of the invention, one can evaluate one or more of the angles formed by beams F1, F2 and F3 by using simple trigonometric formulae and obtain the leg length and angle amplitude of triangle XYZ: if they correspond to the values provided by the manufacturer, the inclination is the right one, otherwise it is not so.

While the preferred embodiment of the invention uses laser devices, they could be replaced by optical devices and/or mechanical devices such as graduated rulers (not shown) and the like. The above calculations could be also effectively assisted and/or carried out by proper computers in which data relating to various motorcycle models to be checked are stored in a database.

On the other hand, as mentioned before, as an alternative to the shown laser beam receiving elements, the use of Doppler effect distance detectors or photodiodes is contemplated.

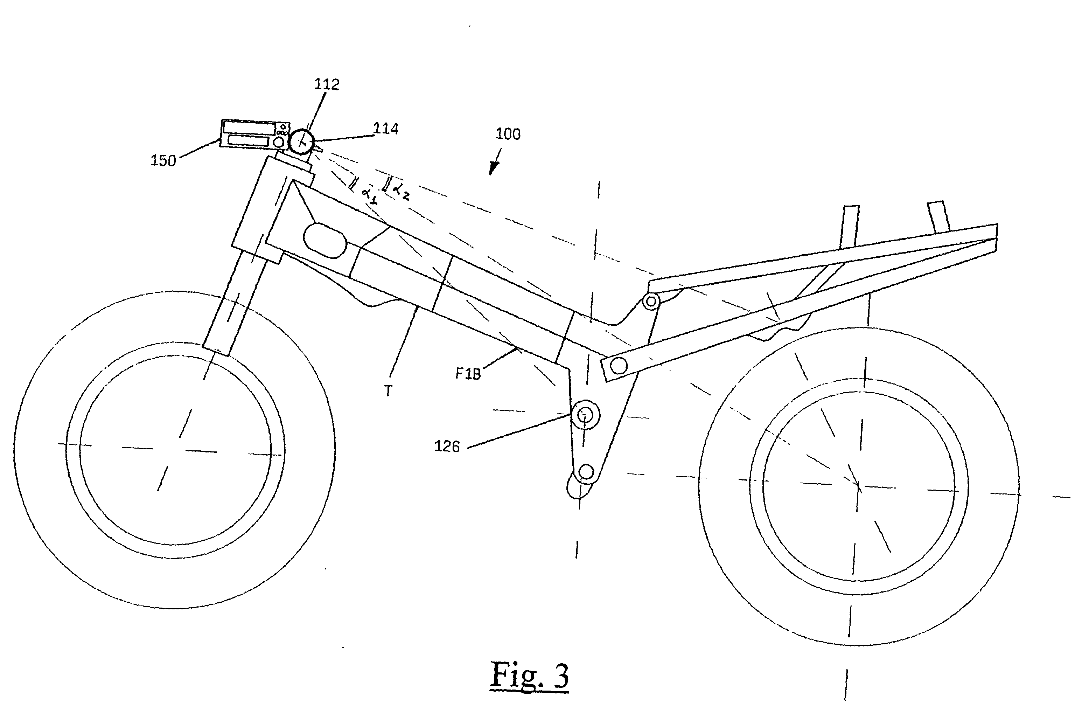

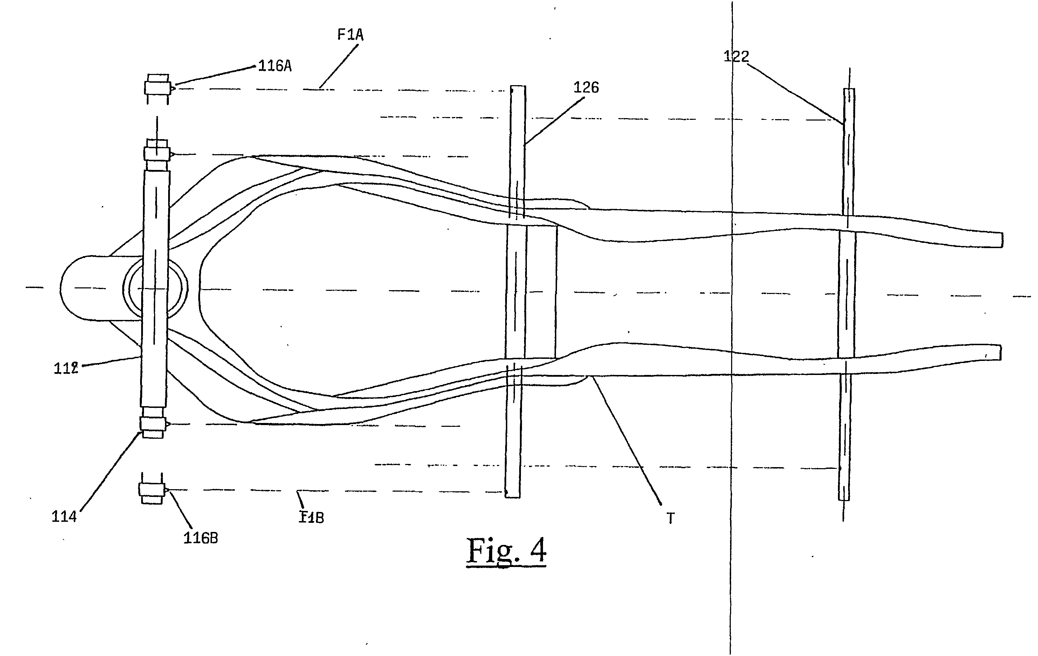

Figures 3 and 4 diagrammatically show a second embodiment of the device assembly according to the invention as mounted to a different motorcycle frame.

In this embodiment also a device 100 to be mounted to the frame T is provided for, preferably at the steering unit, such a device being comprised of two concentric tube-like elements 112 and 114 (the element 112 being the outermost and fixed to the frame). The inner tube-like element 114 is freely rotatable with respect to the outer one 112 and is provided with one or two (as in Figure 4) laser beam emitting devices 116A, 116B arranged at its ends. An apparatus 150 allowing to evaluate the rotation which has been made with respect to any position taken as a reference, is fixed to said outer tube-like element. Such an apparatus could be a digital goniometer which is resettable at any orientation with respect to the horizontal position. The beams F which are emitted by laser beam emitting devices 116A and 116B are directed towards reference signs or apparatus which are arranged at or fixed to the ends of proper members 126, 122. Such members preferably are bars. One of them could be for example inserted into the rear fork fulcrum.

Also with a device assembly as described above, which could be mounted to a motorcycle also without any disassembly operations, it is possible to obtain all the checks, verifications and measurements which have been set forth above in details. For example, by resetting the digital goniometer at the angle corresponding to beam F1B (relative zero) one could evaluate and calculate the angles α₁ and/or α₂ (Fig. 3).

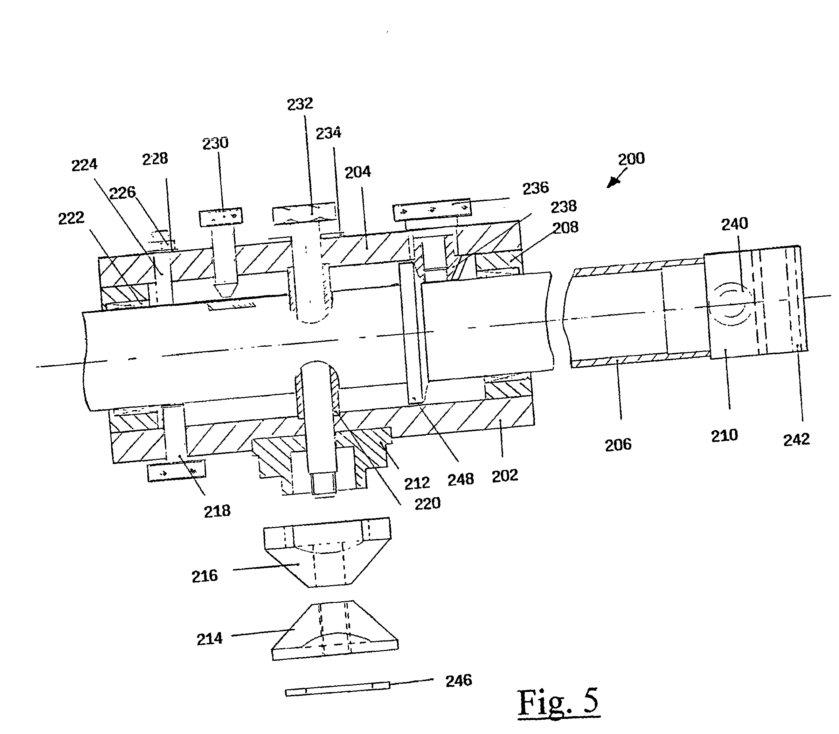

Figure 5 shows, by a cross-sectional view, a portion of a device 200 which functionally is very similar to the device 10 or the device 100. Substantially the device 200 comprises a body having a bottom plate 202 and an upper plate 204 joined together. Inside the room between the two plates, a central tube 206 is placed, such a tube being rotatably supported by bearings 222. At the ends of tube 206, two respective supports 210 with holes 240 for fixing the laser beams emitting devices and the angle sensing devices (at 242 an adapter bushing is indicated). The device 200 can be mounted to the frame by a connecting flange 212 and upper and lower cone-shaped members 216 and 214 and a washer 246.

The central tube is rotated, by a knurled small knob 236 which acts on a driving gear 238 engaged with a driven gear 248. The knurled head stud 230 locks the tube against rotation while the stud 218 acts as centering device for avoiding tube tilting.

As it will be now clear in view of the foregoing description, the present invention brilliantly attains the proposed objects and provides a good, precise, cheap, practical and light weight apparatus for evaluating, checking and measuring geometric quantities including angles, inclinations, lengths and data relating to the parallelism between the various motorcycle frame components.

Of course, while it is convenient to use the device 10, 100 or 200 according to the invention together with bars as 22, 26, 122, 126, it also could be used alone together with linear measurement instruments as a simple graduated rod. For example one can arrange one end of such a graduated rod at a proper place of one side of the motorcycle and point one of the laser beams at the graduated rod and finally read the indicated measure; by arranging the same graduated bar at a corresponding place of the other side of the motorcycle the same measure must be obtained: otherwise it will mean that such a piece is not centered with respect to the motorcycle axis. For example the wheel perpendicularity could be checked.

While the invention has been disclosed and shown only with reference to its particular embodiments, it will be clear for a skilled man that various changes, variations, replacements and additions of parts by other functionally equivalent components could be made without departure from the scope of protection as set forth in the appended claims.

## Claims

1. Device assembly for measuring geometric quantities of a frame (T) of two wheeled vehicles comprising one or more devices (10,100,200) and a check member (22,26,122,126) both connected to said frame (T), characterised in that said device (10,100,200) comprises a first outer tube-like element (12,112) and a second inner tube-like element (14,114,206) which is coaxial with the first outer tube-like element (12,112) and rotatable within it, wherein said second inner tube-like element (14,114,206) is provided at its ends with one or more laser beam emitting elements (16A,16B,116A,116B) or graduated rulers, said check member (22,26,122,126) comprising at its two ends respective elements (20A,20B) receiving the laser beams (F1A,F1B,F) emitted by said laser beam emitting elements (16A,16B,116A,116B) or the ends of said graduated rulers, to measure geometric quantities between said second inner tube-like element (14,114,206) and said check member (22,26,122,126), wherein means are provided between said first outer tube-like element (12,112) and said second inner tube-like element (14,114,206) for evaluating and sensing the amplitude or amount of rotation of said second inner tube-like element (14,114,206) with respect to said first outer tube-like element (12,112).

2. Device assembly according to claim 1, characterised in that said device (10,100,200) is generally connected to said frame (T) at such a front position substantially as to replace or superimpose itself to the steering unit.

3. Device assembly according to claim 1, characterised in that the first outer element of said device (200) comprises a body having two plates (202,204) joined together while the second inner element is a central tube (206) placed between said two plates (202,204), said tube (206) being rotatable within them.

4. Device assembly according to claim 1, characterised in that said means are selected from the group comprising goniometers, digital goniometers, inclinometers, electronic encoders.

5. Device assembly according to claim 1, characterised in that said check member comprises a rod or bar (26,126) connected to said frame (T) at the rear fork fulcrum (F), and/or a rod or bar (22) connected to said frame (T) being inserted into pivot pins of the front shock absorber of the two wheeled vehicle, said bar (22,26,126) having graduated portions (22A,22B).

6. Device assembly according to claim 5, characterised in that said bar (22,26,126) comprises at least one of the following components: a corresponding laser beam receiving element (20A,20B), one bar or rod-like member provided with a reference sign or hole, one Doppler effect distance detector, at least one photodiode or a bar or rod -like graduated member.

7. Device assembly according to claim 1, characterised in that it further comprises computer means for processing the obtained results and optionally comparing them with stored data which are considered as correct.

## Patentansprüche

1. Anordnung zum Messen von geometrischen Größen eines Rahmens (T) von zweirädrigen Fahrzeugen, aufweisend ein oder mehrere Vorrichtungen (10, 100, 200) und ein Prüfelement (22, 26, 122, 128), die beide mit dem Rahmen (T) verbunden sind,
**dadurch gekennzeichnet,**
dass die Vorrichtung (10. 100. 200) ein erstes äußeres röhrenähnliches Element (12, 112) und ein zweites inneres röhrenähnliches Element (14, 114, 206) aufweist, weiches koaxial mit dem ersten äußeren röhrenähnlichen Element (12, 112) verläuft und innerhalb dessen rotierbar ist, wobei des zwelte innere röhrenähnliche Element (14, 114, 206) an seinen Enden mit einem oder mehreren laserstrahlemittierenden Elementen (16A, 16B, 116A, 116B) oder Messstäben versehen ist, wobei das Prüfelement (22, 26, 122, 126) an seinen beiden Enden entsprechende Elemente (20A, 20B) aufweist, die die Laserstrahlen (F1A, F1B, F), die von den laserstrahlemittierenden Elementen (16A. 16B, 116A, 116B) oder den Enden der Messstäbe emittiert werden, empfangen, um die geometrischen Größen zwischen dem zweiten inneren röhrenëhnlichen Element (14, 114, 206) und dem Profelement (22, 26, 122, 126) zu messen, wobei zwischen dem ersten äußeren röhrenähnlichen Element (12, 112) und dem zweiten inneren röhrenähnlichen Element (14, 114, 206) eine Einrichtung zum Auswerten und Messen der Amplitude oder des Drehwinkels des zweiten inneren röhrenähnlichen Elementes (14, 114, 206) bezüglich des ersten äußeren röhrenähnlichen Elementes (12, 112) vorgesehen ist.

2. Anordnung gemäß Anspruch 1,
**dadurch gekennzelchnet,**
dass die Vorrichtung (10, 100, 200) im Wesentlichen mit dem Rahmen (T) in einer derartigen Vorderposition verbunden ist, die im Wesentlichen eine Steuereinheit ersetzt oder sich überlagert.

3. Anordnung gemäß Anspruch 1,
**dadurch gekennzelchnet,**
dass das erste äußere Element der Vorrichtung (200) einen Körper mit zwei Platten (202, 204) aufweist, die miteinander verbunden sind, während das zweite innere Element ein Zentralrohr (206) platziert zwischen den beiden Platten (202, 204) ist, wobei das Rohr (206) zwischen ihnen rotierbar ist.

4. Anordnung gemäß Anspruch 1,
**dadurch gekennzeichnet**,
dass die Einrichtung ausgewählt ist aus einer Gruppe, die Goniometer, Digitalgoniometer, Neigungmesser und elektrische Decoder aufwelst.

5. Anordnung gemäß Anspruch 1,
**dadurch gekennzeichnet**,
dass das Prüfelement eine Stange oder einen Riegel (26, 126) aufweist, der mit dem Rahmen (T) an seinem hinteren Gabelende (F) verbunden ist, und/oder dass eine Stange oder ein Riegel (22) verbunden mit dem Rahmen (T) In Schwenkstifte an dem vorderen Stoßdämpfer des zweirädrigen Fahrzeugs eingeführt ist, wobei der Riegel (22, 26, 126) Messabschnitte (22A, 22B) besitzt.

6. Anordnung gemäß Anspruch 5,
**dadurch gekennzeichnet,**
dass der Riegel (22, 26, 126) wenigstens eine der folgenden Komponenten aufweist: Ein korrespondierendes, laserstrahlempfangendes Element (20A, 20B), einen Riegel oder ein stangenähnliches Element versehen mit einem Referenzzeichen oder Loch, einen Dopplereffekt-Distanzdetektor, wenigstens eine Fotodiode oder einen Riegel oder ein stangenähnliches mit Messeinrichtungen versehenes Element.

7. Anordnung gemäß Anspruch 1,
**dadurch gekennzeichnet,**
dass es außerdem eine Computereinrichtung zum Verarbeiten der erhaltenen Resultate und zum optionalen Vergleichen dieser Resultate mit gespeicherten Daten, die als korrekt angenommen werden, aufweist.

## Revendications

1. Ensemble de dispositif pour mesurer des grandeurs géométriques d'un cadre (T) de véhicules à deux roues comprenant un ou plusieurs dispositifs (10, 100, 200) et un élément de vérification (22, 26, 122, 126), tous deux reliés audit cadre (T), caractérisé en ce que ledit dispositif (10, 100, 200) comprend un premier élément tubulaire externe (12, 112) et un second élément tubulaire interne (14, 114, 206) qui est coaxial au premier élément tubulaire externe (12, 112) et peut tourner à l'intérieur de ce dernier, dans lequel ledit second élément tubulaire interne (14, 114, 206) est muni à ces extrémités d'un ou de plusieurs éléments émetteurs de faisceaux laser (16A, 16B, 116A, 116B) ou de règles graduées, ledit élément de vérification (22, 26, 122, 126) comprenant, à ses deux extrémités, des éléments respectifs (20A, 20B) recevant les faisceaux lasers (F1A, F1B, F) émis par lesdits éléments émetteurs de faisceaux laser (16A, 16B, 116A, 116B) ou les extrémités desdites règles graduées, afin de mesurer des grandeurs géométriques entre ledit second élément tubulaire interne (14, 114, 206) et ledit élément de vérification (22, 26, 122, 126), des moyens étant prévus entre ledit premier élément tubulaire externe (12, 112) et ledit second élément tubulaire interne (14, 114, 206) pour évaluer et détecter l'amplitude ou la valeur de rotation dudit second élément tubulaire interne (14, 114, 206) par rapport audit premier élément tubulaire externe (12, 112).

2. Ensemble de dispositif selon la revendication 1, caractérisé en ce que ledit dispositif (10, 100, 200) est relié de manière générale audit cadre (T) au niveau d'une position avant telle à remplacer ou à se superposer elle-même sensiblement à l'unité de direction.

3. Ensemble de dispositif selon la revendication 1, caractérisé en ce que le premier élément externe dudit dispositif (200) comprend un corps présentant deux plaques (202, 204) réunies entre elles alors que le second élément interne est un tube central (206) placé entre lesdites deux plaques (202, 204), ledit tube (206) pouvant tourner à l'intérieur de celles-ci.

4. Ensemble de dispositif selon la revendication 1, caractérisé en ce que lesdits moyens sont choisis dans le groupe comprenant des goniomètres, des goniomètres numériques, des inclinomètres, des codeurs électroniques.

5. Ensemble de dispositif selon la revendication 1, caractérisé en ce que ledit élément de vérification comprend une tige ou barre (26, 126) reliée audit cadre (T) au niveau du point d'appui (F) de la fourche arrière, et/ou une tige ou barre (22) reliée audit cadre (T) en étant insérée dans des pivots de l'amortisseur avant du véhicule à deux roues, ladite barre (22, 26, 126) présentant des parties graduées (22A, 22B).

6. Ensemble de dispositif selon la revendication 5, caractérisé en ce que ladite barre (22, 26, 126) comprend au moins un des éléments suivants : un élément de réception de faisceaux laser correspondant (20A, 20B), un élément en forme de barre ou de tige muni d'un signe ou trou de référence, un détecteur de distance à effet Doppler, au moins une photodiode ou un élément gradué en forme de barre ou de tige.

7. Ensemble de dispositif selon la revendication 1, caractérisé en ce qu'il comprend en outre des moyens de calcul pour traiter les résultats obtenus et les comparer éventuellement avec des données stockées qui sont considérées comme correct.
